# EUROPÄISCHE PATENTSCHRIFT

(11) **EP 1 304 034 B1**
(45) Veröffentlichungstag und Bekanntmachung des Hinweises auf die Patenterteilung: **11.08.2004**
(21) Anmeldenummer: 02022632.0
(22) Anmeldetag: 09.10.2002
(51) Int. Cl.: A01N 25/24, A01N 25/22, A01N 65/00

(54) **Pflanzenschutz- und Stärkungsmittel auf Zwiebelbasis**
Plant protection and strengthening agents based on onions
Agents protecteurs et fortifiants de plantes basés sur des oignons

(30) Priorität: 19.10.2001 DE 10151746
(43) Veröffentlichungstag der Anmeldung: 23.04.2003
(73) Patentinhaber: se ma Gesellschaft für Innovationen mbH, 06869 Coswig (DE)
(72) Erfinder: Rauch, Karin, 06842 Dessau (DE); Dieckmann, Udo, Dr., 39307 Genthin (DE)

(56) Entgegenhaltungen:
- DE-A- 4 327 792
- DE-A- 19 904 703
- FR-A- 2 547 986
- DATABASE WPI Section Ch, Week 198714 Derwent Publications Ltd., London, GB; Class A18, AN 1987-099155 XP002229878 & JP 62 048764 A (SHINKO KAGAKU KOGYO KK), 3. März 1987 (1987-03-03)

## Beschreibung

Die Erfindung betrifft Rezepte zur Herstellung von Formulierungen auf Basis von frisch gepressten Zwiebelsäften, wobei diesen Zwiebelsäften Lösungsmittel zur Stabilisierung zugesetzt werden und zusätzlich Polymere oder Polymergemische, die biologisch abbaubar sind, die die Wirkstoffe der Zwiebeln nach dem Trocknen in den aufgesprühten transparenten dünnen Schichten einschließen. Weiterhin werden UV-Absorber zugesetzt, um eine weitere Schädigung durch UV Strahlung sowie Schäden an bereits von saugenden Insekten betroffenen Pflanzenarten der Zierpflanzen, Nutzpflanzen und Waldpflanzen zu vermeiden.

Die Familie der Aphidina, allgemein Blattläuse, ist sehr vielfältig und die Schädigungen sind an vielen Zierpflanzen wie Rosen und auch Nutzpflanzen wie Zuckerrüben und Kohlpflanzen sichtbar. Die Weibchen der Blattläuse legen auf den spezifischen Pflanzen die befruchteten Eier, die dort auch überwintern.

Im Frühjahr schlüpfen aus den Eiern Larven, die sich auf den Blattunterseiten niederlassen und saugen. Durch das Saugen bilden sich auf den Blättern Beläge, dabei werden die Blätter deformiert, teilweise gelb und sterben schließlich ab. Das Wachstum der Pflanzen wird wesentlich gestört. Dies trifft auch auf andere saugenden Insekten oder deren Larven zu.

An den durch die Insekten bereits geschädigten Pflanzenarten wie Blättern und Früchten wird der Stoffwechsel der gesamten Pflanze wesentlich beeinträchtigt, was zu Wachstums-und Ertragsrückgängen führt, wobei die bereits geschädigten Pflanzenteile durch die Wirkung der UV-Strahlungsanteile noch stärker im Wachstum gestört werden. Durch die Summation dieser Faktoren sind die Ertragsausfälle und damit die wirtschaftlichen Schäden erheblich.

Eine Folge der Schädigungen durch saugende Insekten und UV-Strahlungsanteile auf vegetativen und generativen Pflanzenteilen sind die dadurch entstehenden Eintrittspforten für Pilz-Pathogene, die zu einem vorzeitigen Verfall von Früchten, Blüten und Pflanzen führen. Eine weitere Ursache für Verbräunungen und Verkorkungen der Blätter und Blüten sind die zusätzlich zur UV-Strahlungsbelastung auftretenden Umwelttoxine. Um gute Ernteergebnisse bei hoher Quantität zu sichern, besteht ein hohes Interesse insbesondere bei den Pflanzenanbau-Betreibern die Pflanzen durch Stärkung ihres vorhandenen Schutzmechanismus zu stabilisieren und die Schäden gering zu halten.

In der DE-OS 44 37 945 ist ein Pflanzenstärkungsmittel auf Vitamin E- Basis mit oberflächenaktiven Mitteln sowie weiteren Formulierungs- Hilfsstoffen beschrieben, die einen geeigneten Träger enthalten, um diese Mittel auf die Pflanzen zu applizieren. Dieses Pflanzenstärkungsmittel soll wirken, wenn Herbizide auf die Pflanzen aufgebracht wurden, die Sauerstoffradikale erzeugen oder Phytotoxizitätserscheinungen durch Umwelttoxine, ungünstige Wetterbedingungen oder Agrochemikalien an den Pflanzen auftreten.

In der WO 89/11795 wird ebenfalls ein Verfahren zur Erhöhung der Widerstandsfähigkeit von Pflanzen auch auf Vitamin E- Basis oder Vitamin C- Zusatz beschrieben. Es wird eine Verbesserung der Widerstandsfähigkeit von Pflanzen bei vorherigem Einsatz von Pflanzenschutzmitteln nachgewiesen.

Mit der Patentsschrift DE 19904703 A1 werden Formulierungen als Pflanzenschutzmittel beansprucht, die neben einem Wirkstoff noch Substanzen der Vitamin E- Gruppe sowie einen UV-Absorber auf Basis Methoxyzimtsäuren (- Derivate) zum Schutz vor UV-Einstrahlungen und die wahlweise Netzmittel oder Emulgatoren enthalten, damit die Wirkstoffe von der Pflanze aufgenommen werden können. Insbesondere wurde gefunden und damit beansprucht, dass Alkali- Erdalkali- und Eisen-Salze der Methoxyzimtsäure gute Eigenschaften als Lösungsvermittler in wässrigen Lösungen besitzen.

Diese bisher beschriebenen Pflanzenstärkungsmittel besitzen den Nachteil, dass sie von der Pflanze oder Teile der Pflanze, wo sie wirken sollen, aufgenommen werden müssen oder sie werden durch Regen sofort heruntergespült. Dies bedeutet jedoch, dass die Wirkstoffe sich in der Pflanze, den Blüten, den Früchten und Blättern befinden und gegebenenfalls in die Nahrungskette gelangen. Einige Stoffe werden durch die Bodenbakterien abgebaut.

Dabei stellen die nicht abbaubaren Wirkstoffe eine Gefährdung der Bodenkulturen und der Gewässer dar.

Aufgabenstellung der vorliegenden Erfindung war es deshalb ein Pflanzenstärkungsmittel, das vollständig biologisch abbaubar ist und eine Depotwirkung sowohl für die in dem Zwiebelsaft enthaltenden Wirkstoffe als auch die den UV-Schutz bewirkenden Wirkstoffe bei hohem Wirkungsgrad erreicht.

Gelöst wurde diese Aufgabenstellung mit einem wässrig/ alkoholischen Pflanzenstärkungsmittel, dass einen Anteil an kalt gepressten Zwiebelsaft zusammen mit einem oder mehreren Acrylsäureestern und einem Polymer oder Polymergemisch enthält.

Überraschenderweise wurde gefunden, dass bestimmte einzelne Polymere oder Polymermischungen die Wirkstoffe der Zwiebel deponieren können ohne einen starken Zwiebelgeruch nach der Bildung des transparenten Überzuges über die besprühten Pflanzenteile zu hinterlassen. Durch die gebildete transparente Schicht, die nach dem Trocknen nicht sichtbar ist und sich erst langsam durch Begießen oder länger anhaltendem Regen löst, wird gleichzeitig ein bedeutend wirkungsvoller UV-Schutz als bei bisherigen Pflanzenstärkungsmitteln erreicht. Damit wurde ein neues Wirkprinzip gefunden. Im Boden werden die gelösten Bestandteile der Schutzschicht einschließlich dem Polymer oder der Polymermischung biologisch abgebaut und es wird zusätzlich ein Düngeeffekt erreicht.

Das Pflanzenschutzmittel enthält den kaltgepressten Zwiebelsaft oder ein daraus hergestelltes Konzentrat in Gew % von 2 % bis 80 %, bezogen auf das Gesamtmittel oder es können auch ein oder mehrere Wirkstoffe des Zwiebelsaftes synthetisch hergestellt sein und in den natürlich vorkommenden Konzentrationsverhältnissen zugesetzt werden. Als Wirkstoffe der Zwiebel sind 5-Methyl-1,4 -Thiazinan-3-carbonsäure, deren Alkali-und Erdalkalisalze sowie deren Derivate und Ester mit C₁ bis C₁₀ weiterhin die S-Allylcysteinsulfoxide, die S-Methylcysteinsulfoxide, die S-Ethylcysteinsulfoxide, die S-Propylsulfoxide und die Propanthiol-S-oxide einschließlich deren Derivate, die Alkyldisulfide ( etherische Öle) mit C₁ bis C₆ einzeln oder als Mischung geeignet.

Durch den Zusatz von einem oder mehreren miteinander verträglichen Polymeren in solchen Konzentrationen, dass beim Applizieren auf der Pflanze transparente Schichten von 0,01 µm bis 20 µm nach dem Trocknen des wässrigen oder lösungsmittelhaltigen Pflanzenschutzmittels entstehen.

Das Polymer oder Polymergemisch hat die Funktion, die Wirkstoffe der Zwiebel und den UV-Absorber zu speichern, um damit eine Depotwirkung zu erreichen. Die Depotwirkung wird auf der Pflanzenoberfläche erreicht, die Wirkstoffe müssen nicht, können aber teilweise von den Teilen der Pflanze aufgenommen werden, es werden durch die Schutzschichten wesentlich höhere Lichtschutzwirkungen als in den bisher beschriebenen Verfahren erreicht.

Als Polymere ist eine Vielzahl von hydrophilen Polymeren, die einzeln oder als Mischung transparente Schichten bilden, geeignet. Dazu gehören: Gummiarabikum, Polyethylenglykole, Methylcellulose, Polyvinylpyrrolidon, Agar Agar, Gelatine, PVC, Chitosan, PVA, PVE, Stärke und deren Derivate, Heteropolysaccaride, Polysaccaride, Polyacrylate, Polyarcylamide, Kollidon u.a.,

Gemäß dieser Erfindung werden bei Formulierungen mit diesen Polymeren Schichtdicken auf den Pflanzen zwischen 0,01 µm bis 20 µm durch verschiedene Sprühverfahren mit Treibgasen wie Methan, Propan, Butan u.a. oder als Pumpspray mit Luft oder auch als Drucksprühverfahren durch Düsen oder durch Sprühpistolen der unterschiedlichsten Art ( wie z.B. Air-Less) erreicht.

Der UV-Schutz in der transparenten Schicht wird durch eine Klasse von substituierten Acrylsäureestern, Acrylsäure-Derivaten, oder deren Salze als UV-Absorber erreicht, dabei werden Konzentrationen zwischen 0,05 g/l bis 20 g/l eingestellt. Diese substituierten Acrylsäureester mit Substituenten von z.B. p- Hydroxy-, m-Methoxy-p-Hydroxy-oder m-Ethoxy-p-Hydroxy-phenyl in 3-Stellung können neben der Wirkung als UV-Absorber gleichzeitig als Pflanzenschutzmittel bakterizid, fungizid, herbizid, nematizid, insektizid, algizid und virizid wirken, dazu kann eine Substanz verwendet werden oder auch die Mischung aus zwei oder mehreren Substanzen.

Überraschenderweise bewirkt der Zusatz der substituierten Acrylsäureester, die biologisch abbaubar sind, eine Verstärkung der Wirkung der Zwiebelsaftkomponenten.

Die erfindungsgemäßen Mittel können neben den Hauptkomponenten noch oberflächenaktive Mittel zur besseren Verteilung der Schutzschicht auf der Pflanzenoberfläche bis zu 2 Gew % enthalten sein, dabei werden insbesondere Polysaccaride und die Natrium-, Kalium-Magnesium- sowie Kalziumsalze der natürlichen Fettsäuren mit C₁₂ bis C₃₅ eingesetzt.

Vorzugsweise ist das erfindungsgemäße Pflanzenschutzmittel eine Formulierung, die vor der Anwendung 1:3 mit Wasser verdünnt, appliziert wird, wahlweise kann jedoch eine Formulierung ohne Verdünnung eingesetzt werden, dabei enthält die sprühfähige Form mind. 200 g/l an Gesamtwirkstoffe. Die erfindungsgemäßen Formulierungen können sowohl als Pflanzenstärkungsmittel als auch Pflanzenschutzmittel, je nachdem welche der substituierten Acrylsäureester zugesetzt sind, eingesetzt werden, dabei ist die Applikation unabhängig von dem Boden, dem Klima und der Region.

Wegen des Gehaltes an Ethanol ist sowohl das Konzentrat als auch die gebrauchsfähige Formulierung lagerstabil. Diese Formulierung verhindert den Befall mit saugenden Insekten insbesondere durch eine flexible transparente Schutzschicht, die gasdurchlässig ist, hat eine deutliche Depotwirkung und die Schäden durch zusätzlich ungünstige Klimabedingungen werden stark vermindert. Damit können die Leistungsfähigkeiten der Nutzpflanzen und damit die Ernteergebnisse deutlich gesteigert werden.

### Beispiele

### 1. Herstellung der Formulierungen

### Formulierung A

5l frisch gepresster Zwiebelsaft werden so filtriert, so dass ≥ 5 µm große Fruchtteile zurückgehalten werden.

In 1l dest. Wasser werden 10g Gelatine unter ständiges Rühren bei ca. 25°C gelöst und mit dem Zwiebelsaft gemischt. In 4l Ethanol werden 50 g Kollidon gelöst und dazu 20g UV-Absorber semaSORB 9827 ( subst. Acrylsäureester) und 5g UV-Absorber semaSORB 9815 ( subst. Acrylsäureester) gegeben und solange gerührt bis alle Bestandteile gelöst sind.

Alle Lösungen werden zu insgesamt 101 Formulierung A bei 30°C unter ständigem Rühren gemischt, dabei stellt sich ein pH-Wert von 5,5 ein und die Formulierung ist gut sprühfähig.

### Formulierung B

21 frisch gepresster Zwiebelsaft werden mit 31 Ethanol in dem 20g UV-Absorber semaSORB 20102 gelöst wurden, versetzt und so filtriert, dass Fruchtteile der Zwiebel ≥ 5µm zurückgehalten werden. Dann werden 30g Polyvinylalkohol gelöst in 41 dest. Wasser dazugegeben, gerührt bei 30°C und anschließend mit 1l Ethanol, wo 10g UV-Absorber semaSORB 20107 gelöst waren, aufgefüllt. Der pH-Wert wurde auf 5,0 ± 0,2 mit Weinsäure eingestellt. Die Formulierung B ist nun gut sprühfähig.

### Formulierung C ( Vergleichslösung)

Als Blindlösung ist der mit MEK ( Methylethylketon) vergälte Alkohol mit dest. Wasser auf 40 Vol% verdünnt eingesetzt worden.

### 2. Testergebnisse

### 2.1 Nachweis der Wirksamkeit von mit Blattläusen befallenen Rosenstauden und Holundertriebe

| Einsprühung der Pflanzen mit Formulierungen | | | | | | | | | |
|---|---|---|---|---|---|---|---|---|---|
| Anzahl der Blattläuse | C (Vergleichslösung) | | | Formulierung B | | | Formulierung A | | |
| | | (24h danach) | | | (24h danach) | | | (24h danach) | |
| | vorher | lebend | Exitus | vorher | lebend | Exitus | vorher | lebend | Exitus |
| auf Rosen ( Knospen) | 43 | 35 | 8 | 48 | 2 | 46 | 55 | 0 | 55 |
| auf Holunder (frische Triebe) | 65 | 60 | 5 | 53 | 0 | 53 | 72 | 0 | 72 |

Die Pflanzen wurden mit einer Pumpsprayflasche von oben und auf die Blattunterseiten besprüht. Die besprühten Rosenzweige und Holundertriebe waren auch nach 14 Tagen noch blattlausfrei. Die Wirkung beider Formulierungen ist signifikant.

### 2.2 Nachweis der Depotwirkung

Nach 20 Tagen wurden die Pflanzen je 2-mal mit 20 l normalen Leitungswasser (25°C, mit 20° dH) beregnet und je 3 Blätter mittlerer Größe entfernt. Diese Blätter wurden mit 50% iger ethanolisch alkalischer Lösung extrahiert und auf 50 ml aufgefüllt. Davon wurden die optischen Dichten bei 350 nm ermittelt, Tabelle 1.

**Tabelle 1**

| Pflanze | Blindwert C vorher/ nachher | Formulierung B vorher/ nachher | Formulierung A vorher/nachher |
|---|---|---|---|
| Rosen | 0,02 | 1,22 / 0,62 | 1,25 / 0,32 |
| Holunder | 0,02 | 0,58 / 0,38 | 0,53 / 0,26 |

Damit ist nachgewiesen, dass die Formulierungen A und B auch nach 20 Tagen noch eine hohe Wirksamkeit besitzen, die Schutzschichten durch Regen entfernt werden können und nach 2 Regengüssen noch immer eine ausreichende Schutzwirkung vorhanden ist.

### 2.3 Nachweis der Wirksamkeit der UV-Blocker

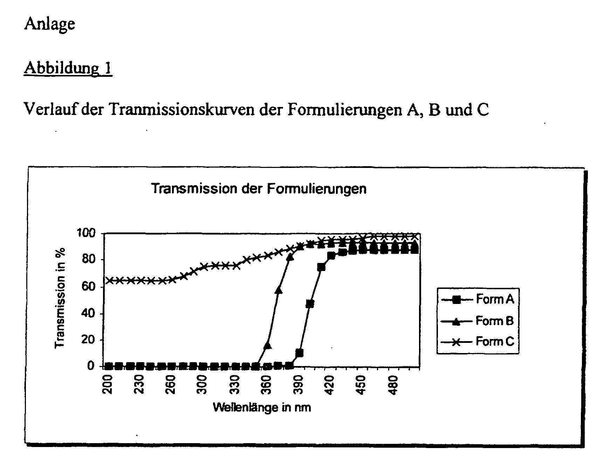

Die Abb.1 zeigt die Spektralfunktion der Formulierungen A, B und C nach dem eine dünne Schicht ( ca. 1µm) auf eine Glasplatte aufgespürt wurde. Die Schichtdicke der besprühten 1mm Glasplatte entspricht der üblicherweise auf die Pflanzenteile d.h. Blätter, Früchte, frische Triebe und Blüten aufgesprühten Schichtdicken.

### Siehe Abbildung 1, Anlage:

Die Wirkung wurde durch Exposition mit natürlichen direkter Sonnenstrahlung von Rosenblättern, befallen mit Blattläusen und anschließender Messung der blauen(B); grünen(G); roten(R) Reflexionsdichten nach DIN 4512 Status A, nachgewiesen. In der Tabelle 2 sind die Messwerte aufgeführt.

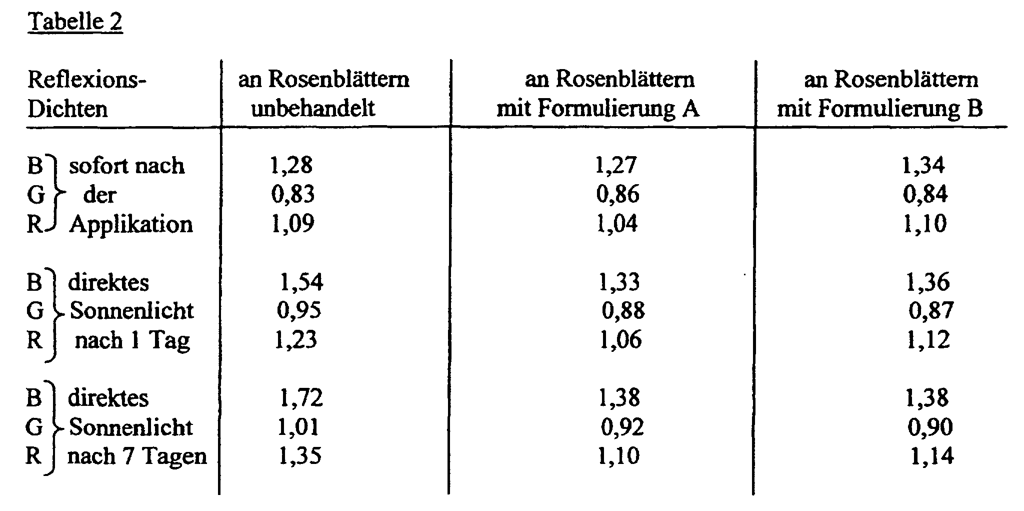

Aus den Werten der Tabelle 2 ist besonders deutlich an den blauen Reflexionsdichten der Rosenblätter ersichtlich, dass die durch Blattläuse geschädigten Rosen-Blätter deutlich schneller vergilben als die mit den Formulierungen A und B, die für viele Rezeptvarianten gemäß unseren Angaben stehen.

Damit ist auch prinzipiell der Zusammenhang zwischen Depotwirkung, Wirkung der Zwiebel-Komponenten und dem UV-Schutz ausreichend nachgewiesen.

## Patentansprüche

1. Wässriges Pflanzenschutzmittel enthaltend Zwiebelsäfte oder Zwiebel-Konzentrate, einem Lösungsmittelgemisch einem Polymergemisch sowie substituierte Acrylsäurederivate.

2. Pflanzenstärkungsmittel nach Anspruch 1, **dadurch gekennzeichnet, dass** gepresster Zwiebelsaft in einer Menge von 2 bis 80 Gew% bezogen auf das Gesamtmittel enthalten ist.

3. Pflanzenstärkungsmittel nach Anspruch 1, **dadurch gekennzeichnet, dass** Zwiebelsaftkonzentrat in einer Menge von 0,5 bis 25 Gew.% bezogen auf das Gesamtmittel enthalten ist.

4. Pflanzenstärkungsmittel nach Anspruch 1 bis 3, **dadurch gekennzeichnet, dass** biologisch abbaubare Lösungsmittel in einer Menge von 10 bis 85 Gew%, bezogen auf das Gesamtmittel enthalten sind.

5. Pflanzenstärkungsmittel nach Anspruch 4, **dadurch gekennzeichnet, dass** das Lösungsmittel aus einem Gemisch von 2 oder mehreren mit Wasser ganz oder teilweise mischbaren Lösungsmitteln besteht.

6. Pflanzenstärkungsmittel nach Anspruch 1 bis 5, **dadurch gekennzeichnet, dass** ein Polymer oder Polymergemisch zugesetzt wird, welches im Mikrobereich eine transparente Schicht von 0,01 bis 20 µm bildet.

7. Pflanzenstärkungsmittel nach Anspruch 1 bis 4, **dadurch gekennzeichnet, dass** einzelne Wirkstoffe der Zwiebel zugesetzt werden und dass diese Wirkstoffe auch ausschließlich synthetisch hergestellt sind.

8. Pflanzenstärkungsmittel nach Anspruch 7, **dadurch gekennzeichnet, dass** Wirkstoffe der Zwiebel als 5-methyl-1,4 thiazinan-3-carbonsäure, deren Derivate sowie Ester mit C1 bis C10 sowie deren Na, K, Mg, Ca-Salze und die S-Allylcysteinsulfoxide, die S-Methylcysteinsulfoxide, die S-Ethylcysteinsulfoxide, S-Propylsulfoxide sowie Propanthiol-S-oxid und deren Derivate sowie die Alkyldisulfide ( ätherische Öle) mit C₁ bis C₆ einzeln oder als Mischung mit 2 oder mehreren Wirkstoffen enthalten sind.

9. Pflanzenstärkungsmittel nach Anspruch 6, **dadurch gekennzeichnet, dass** als Polymere folgende Substanzen eingesetzt werden: wie Gelatine, PVC, Polyvinylpyrollidon, Agar Agar, Chitosan, Polyvinylalkohol, Methylcellulose und Derivate, Stärke, Heteropolysaccaride, Polysaccaride, Polyacrylate ( neutral, kationisch, anionisch), Polyacrylamide, Gummiarabikum, Kollidon und Polyethylenglykole, jeweils einzeln oder als Mischungen.

10. Pflanzenstärkungsmittel nach Anspruch 1 bis 9, **dadurch gekennzeichnet, dass** ein oder mehrere substituierte Acrylsäureester in der Konzentration von 0,01 bis 10 % bezogen auf das wässrige Gesamtmittel enthalten sind.

11. Pflanzenstärkungsmittel nach Anspruch 10, **dadurch gekennzeichnet, dass** die substituierte Acrylsäureester die allgemeine Struktur 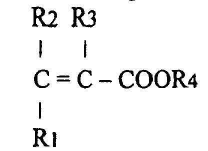 besitzen, wobei R₁ - substituierte p-Hydroxiphenyle der allgemeinen Formel: 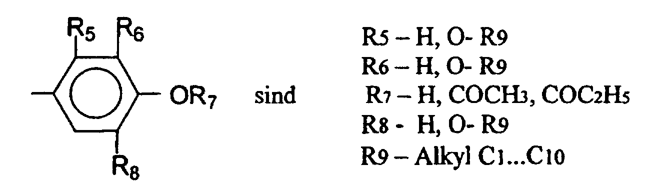 R₂ - H, Alkylreste C₁....C₈
R₃ - H, COOR₁₀ mit R₄, R₁₀ - H, Alkyl C₁-C₁₀ oder -COR₁₀ oder -C-R₁₀
oder deren Alkalisalze in Konzentrationen zwischen 0,05 g/l bis 20 g/l enthalten sind.

12. Pflanzenstärkungsmittel nach Anspruch 1 bis 11, **dadurch gekennzeichnet, dass** zusätzlich bis zu 2 Gew.% bezogen auf das Gesamtmittel an oberflächenaktiven Substanzen insbesondere an Polysaccariden und Natrium-, Kalium-, Magnesium- sowie Ca-Salze der natürlichen Fettsäuren mit C12 bis C35 enthalten sind.

13. Pflanzenstärkungsmittel nach Anspruch 8 und 11, **dadurch gekennzeichnet, dass** die beanspruchten Substanzen bakterizid, fungizid, herbizid, nemantizid, insektizid, algizid, vivizid und oder als UV-Strahlungsschutz wirkende Substanz ist.

14. Pflanzenstärkungsmittel nach Anspruch 1 bis 13, **dadurch gekennzeichnet, dass** es sowohl als sprühfähige Flüssigkeit oder als Wasser verdünnbares Konzentrat, wobei ein Teil des Konzentrats mit 5 bis 50 Teilen Wasser verdünnt werden kann, vorliegt.

15. Verwendung des Pflanzenstärkungsmittels nach Anspruch 1 bis 14 als zusätzlicher Schutz der bereits durch Insekten oder Bakterien geschädigten Stellen der Pflanzen vor Austrocknen und harter UV-Strahlung.

16. Pflanzenstärkungsmittel nach Anspruch 1 bis 15, **dadurch gekennzeichnet, dass** es auf die Wurzeln, den Boden, den Stamm, den Samen, die Früchte, frische Triebe auf die Blätter der gesamten Pflanze aufgebracht wird.

## Claims

1. Watery plant protection agent including onion juice or concentrate of onions, a solvent mixture, a polymer mixture, as well substituted acryl acid derivates.

2. Plant protection agent under claim 1, **characterized by** including squeezed onion juice in quantity from 2 % to 80 % referred to the total.

3. Plant protection agent under claim 1, **characterized by** including concentrate of onion juice in a quantity from 0,5 % to 25 % referred to the total.

4. Plant protection agent under claim 1 to 3, **characterized by** including biodegradable solvents in a quantity from 10 % to 85 % referred to the total.

5. Plant protection agent under claim 4, **characterized by** a solvent mixture of two or more with water completely/partly mixed solvents.

6. Plant protection agent under claim 1 to 5, **characterized by** using one polymer or a mixture of polymers, which create a transparent layer over 0,01 to 0,02 µm.

7. Plant protection agent under claim 1 to 4, **characterized by** separate active substances from onions, which are used and based on synthetic raw materials.

8. Plant protection agent under claim 7, **characterized by** including active substances from onions as 5-methyl-1,4-thiazinan-3-carbon acid, their derivates and esters with C1 to C10 as well their Na, K, Mg, Ca salts and S-allylcycteinsulfoxides, S-methylcycteinsulfoxides, S-ethylcycteinsulfoxides, S-propylsulfoxides and propanthiol-S-oxide and their derivates and alkyldisulfides (volatile oils) with C1 to C6 as single or mixture with two or more active substances.

9. Plant protection agent under claim 6, **characterized by** using polymers, such as gelatine, PVC, polyvinylpyrollidone, agar agar, chitosan, polyvinyl alcohol, methyl cellulose and derivates, starch, hetero polysaccarides, polysaccarides, polyacrylates (neutral, cation, anion), polyacrylamide, rubber arabicum, collidone and polyethylenglycol.

10. Plant protection agent under claim 1 to 9, **characterized by** including one or more substitute acryl acid esters in a concentration from 0,01 % to 10 % related to the total aqueous phase.

11. Plant protection agent under claim 10, **characterized by** the general structure of the substituted acryl acid ester, 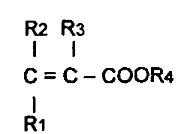 with the general formula of the R1-substituted p-hydroxyphenoles, 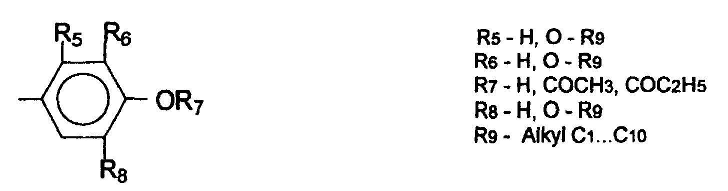 R₂ - H, Alkylreste C₁....C₈
R₃- H, COOR₁₀ mit R₄, R₁₀ - H, Alkyl C₁- C₁₀ oder - CO-R₁₀ oder- C-R₁₀
or with their alkali salts in concentrations between 0,05 g/l and 20 g/l.

12. Plant protection agent under claim 1 to 11, **characterized by** including, additionally up to 2 % wt related to the total of surface active substances, especially polysaccarides and sodium-, potassium-, magnesium- and Ca-salts from natural fat acids with C12 to C35.

13. Plant protection agent under claim 8 to 11, **characterized by** substance properties as bactericide, fungicide, nemanticide, insecticide, algicide, vivicide and or UV-protection.

14. Plant protection agent under claim 1 to 13, **characterized by** using it as spraying liquid or with water mixed concentrate with 5 to 50 parts of water and one part concentrate.

15. Using the plant protection agent under claim 1 to 14 as additionally protection against UV-radiation and draining for already damaged, by insects or bacteria, plants.

16. Plant protection agent under claim 1 to 15, **characterized by** using it with roots, grounds, stem, seed, fruits, young shoots and leafs of the plants.

## Revendications

1. Produit phytosanitaire de type aqueux contenant du jus d'oignons ou du concentré d'oignons, un mélange de solvants, un mélange de polymères ainsi que des dérivés d'acide acrylique substitués.

2. Produit stimulateur de vigueur végétale selon la revendication 1, **caractérisé en ce qu'**il contient entre 2 et 80% en poids de jus d'oignons pressé par rapport à l'ensemble du produit.

3. Produit stimulateur de vigueur végétale selon la revendication 1, **caractérisé en ce qu'**il contient entre 0,5 et 25% en poids de concentré de jus d'oignons par rapport à l'ensemble du produit.

4. Produit stimulateur de vigueur végétale selon la revendication 1 à 3, **caractérisé en ce qu'**il contient entre 10 et 85% en poids de solvants biodégradables par rapport à l'ensemble du produit.

5. Produit stimulateur de vigueur végétale selon la revendication 4, **caractérisé en ce que** le solvant est constitué d'un mélange qui renferme de 2 ou plusieurs solvants pouvant être partiellement ou complètement mélangés à l'eau.

6. Produit stimulateur de vigueur végétale selon la revendication 1 à 5, **caractérisé en ce qu'**il est additionné d'un polymère ou mélange de polymères, lequel forme une couche transparente de 0,01 à 20 µm à micro-échelle.

7. Produit stimulateur de vigueur végétale selon la revendication 1 à 4, **caractérisé en ce qu'**il est additionné de différentes matières actives provenant d'oignons exclusivement fabriquées synthétiquement.

8. Produit stimulateur de vigueur végétale selon la revendication 7, **caractérisé en ce qu'**il contient des matières actives provenant d'oignons telles que l'acide 5-méthyl-1,4-thiazine-3-carboxylique et ses dérivés, l'ester avec C₁-C₁₀ ainsi que ses sels de Na, Mg et de Ca, le S-allyl-cystéine-sulfoxyde, le S-méthyl-cystéine-sulfoxyde, le S-éthyle-cystéine-sulfoxyde, le S-propyle-sulfoxyde ainsi que le propanethiol-S-oxyde et ses dérivés et le disulfure d'alkyle (huile volatile) avec C₁-C₆ (en utilisation seule ou en combinaison avec 2 ou plusieurs matières actives).

9. Produit stimulateur de vigueur végétale selon la revendication 6, **caractérisé en ce qu'**il utilise les polymères suivants : la gélatine, le PVC, le polyvinylpyrrollidone, la gélose, le chitosane, l'alcool polyvinylique, la méthylcellulose et ses dérivés, l'amidon, l'hétéro-polysaccharide, le polysaccharide, le polyacrylate (neutre, cationique, anionique), le polyacrylamide, la gomme arabique, le collidone et le polyéthylène glycol (en utilisation seule ou en combinaison avec d'autres polymères).

10. Produit stimulateur de vigueur végétale selon la revendication 1 à 9, **caractérisé en ce qu'**il contient un ou plusieurs esters acryliques substitués à une concentration pondérale de 0,01 à 10%, par rapport à l'ensemble du produit aqueux.

11. Produit stimulateur de vigueur végétale selon la revendication 10, **caractérisé en ce que** les esters acryliques substitués répondent à la structure générale 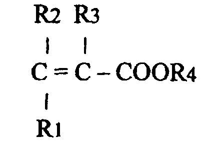 et renferment R₁ - p-hydroxyphényle substitué de formule générale : 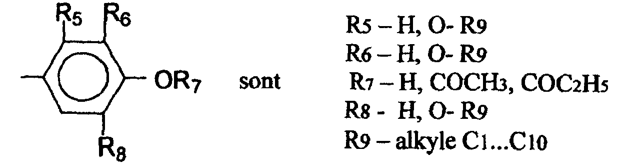 R₂ - H, restes d'alkyle C₁....C₈
R₃ - H, COOR₁₀ avec R₄, R₁₀-H, alkyle C₁- C₁₀ ou - COR₁₀ ou -C-R₁₀
ou leurs sels alcalins à une concentration pondérale de 0,05 g/l à 20 g/l.

12. Produit stimulateur de vigueur végétale selon la revendication 1 à 11, **caractérisé en ce qu'**il contient en plus jusqu'à 2% en poids (par rapport à l'ensemble du produit) de substances tensioactives, en particulier des polysaccharides et des sels de natrium, de potassium, de magnésium et de calcium des acides gras naturels avec C₁₂-C₃₅.

13. Produit stimulateur de vigueur végétale selon la revendication 8 et 11, **caractérisé en ce que** les substances sollicitées ont un effet à la fois bactéricide, fongicide, herbicide, nématicide, insecticide, algicide et vivicide et/ou agissent comme protection contre la radiation U.V.

14. Produit stimulateur de vigueur végétale selon la revendication 1 à 13, **caractérisé en ce qu'**il existe aussi bien sous forme de liquide pulvérisable ou de concentré diluable à l'eau, une part du concentré pouvant être diluée avec 5 à 50 parts d'eau.

15. Produit stimulateur de vigueur végétale selon la revendication 1 à 14, **caractérisé en ce qu'**il s'utilise sur les parties des plantes déjà endommagées par les insectes ou les bactéries comme protection supplémentaire contre le dessèchement et la forte radiation U.V..

16. Produit stimulateur de vigueur végétale selon la revendication 1 à 15, **caractérisé en ce qu'**il s'applique sur les racines, le sol, le tronc, les graines, les fruits, les pousses fraîches et les feuilles de l'ensemble de la plante.
